# EUROPEAN PATENT SPECIFICATION

(11) **EP 0 489 063 B1**
(45) Date of publication and mention of the grant of the patent: **25.10.1995**
(21) Application number: 90912623.7
(22) Date of filing: 28.08.1990
(51) Int. Cl.: B60S 1/08

(54) **SENSING MOISTURE ON SCREEN AND AUTOMATED CONTROLLED WIPING**
NACHWEIS VON FEUCHTIGKEIT AUF DER WINDSCHUTZSCHEIBE SOWIE SELBSTTÄTIG BETRIEBENE SCHEIBENWISCHER
DETECTION DE L'HUMIDITE PRESENTE SUR UN PARE-BRISE ET SYSTEME D'ESSUIE-GLACE COMMANDE AUTOMATIQUEMENT

(30) Priority: 28.08.1989 AU 5987/89; 28.08.1989 AU 59/88
(43) Date of publication of application: 10.06.1992
(73) Proprietor: INTROLAB PTY. LIMITED, North Manly, NSW 2100 (AU)
(72) Inventor: STANTON, Peter, Robert, North Narrabeen, NSW 2101 (AU)
(74) Representative: Alexander, Thomas Bruce
(86) International application number: AU9000380
(87) International publication number: WO9103393

(56) References cited:
- AU-A- 5 118 679
- DE-A- 3 203 091
- US-A- 3 458 889
- US-A- 4 317 073
- US-A- 4 620 141
- US-A- 4 798 956
- US-A- 4 859 867
- US-A- 4 871 917
- PATENT ABSTRACTS OF JAPAN vol. 6, no. 213 (M-167)(1091) 26 October 1982 & JP-A-57 118 952 ( TOKYO SHIBAURA DENKI K.K. ) 24 July 1982
- PATENT ABSTRACTS OF JAPAN vol. 8, no. 265 (P-318)(1702) 5 December 1984 & JP-A-59 132 337 ( NIPPON DENSO ) 30 July 1984
- PATENTS ABSTRACTS OF JAPAN, M-329, page 31, JP,A, 59-100034 (NISSAN JIDOSHA K.K.) 9 June 1984 (09.06.84).
- PATENTS ABSTRACTS OF JAPAN, M-312, page 161, JP,A, 59-57050 (ISUZU JUDOSHA K.K.) 2 April 1984 (02.04.84).

## Description

This invention relates to a system controlling the wiping of automotive windscreens at a rate corresponding to the determined amount of water on the screen.

In Australian patent 546327, a detector mounted externally of the vehicle continuously monitors rain to provide a value for the amount of rain fallen since the completion of the last wipe of the windscreen wiper blade. Once that rain total impinging on the detector reaches some predetermined level the wiper blade is again actuated. Such is typical of prior art automatic windscreen controls which integrate actual rainfall signals falling on the detector in order to determine the rate or frequency of windscreen wiper operation.

An example of prior art is JP-A-57118952 in which a windscreen wiper controller functions in response to rain drops falling upon a detector as a result of a calculation of the quantity of rain that has fallen on the detector itself. Another example of the art is US-A-4859867 which also employs a detector arrangement which is merely responsive to the quantity of rain which falls directly on the detector.

However, such systems are in general deficient at least with regard to the fact that the windscreen needs to be wiped, not only in consideration of rain fall, but also in consideration of other water sources such as spray from nearby cars which does not necessarily directly impinge on the detector but which nevertheless creates an obstacle to driver vision.

The present invention recognises that the magnitude of a wall of water pushed ahead of a sweeping wiper blade can provide an accurate and reliable measure of the quantity of rain that falls on a windscreen during successive sweeps of the wiper blade. With such an accurate measurement of the rate of rainfall it is possible to provide a better control of the motion of the wiper blade to clear the rain from the windscreen in an optimal way.

Accordingly, in one broad form, the present invention can be described as providing a device for controlling a vehicle windscreen wiper comprising:
means for detecting the magnitude of a wall of water pushed by a windscreen wiper across a region of the windscreen as the wiper is in motion across said region; and
means for controlling the next cycle of motion of the windscreen wiper in dependence upon the detected magnitude of the wall of water.

In accordance with the present invention there is disclosed a method of controlling a vehicle windscreen wiper comprising:
directing light energy from the vehicle interior to a point of incidence of the windscreen, swept by the windscreen wiper, at a preselected angle such that the directed light energy will be substantially totally internally reflected by the windscreen only when the exterior surface is dry;
detecting the light energy reflected by the windscreen and determining the amount of the reflected light energy;
electronically processing the determined amount of reflected light energy that is detected during at least one portion of each action of the windscreen wiper to produce a signal; and
controlling the speed of motion of the windscreen wiper, or a time delay from one action of the windscreen wiper to the next action, according to said signal; characterised in that said portion at least includes a period when light energy is reflected as a result of a wall of water in advance of the wiper as the wiper passes the point of incidence and wherein said signal is indicative of the magnitude of the wall of water.

An embodiment of the present invention provides a device for controlling a vehicle windscreen wiper comprising:
a light energy source for directing light energy onto a surface of the windscreen, at a point of incidence to be swept by the windscreen wiper, from the vehicle interior,
a light energy detector for detecting the directed light energy reflected by said windscreen surface and for producing a signal corresponding to the detected amount of reflected light energy;
a controller for controlling the speed of the windscreen wiper action, or a time delay between a current windscreen wiper action and the next windscreen wiper action, characterised in that the controller is controlled by the detected amount of light energy that corresponds to the magnitude of a wall of water in advance of the wiper as the wiper passes said point of incidence.

Preferably the light is in the infra-red range emitted by a light emitting diode, however an infra-red laser beam may also be used.

Preferably the light source and the detector are located in a rear face of a prismatic lens to be held with its opposite front face substantially flush against the windscreen. The prismatic lens preferably includes respective transmitting and receiving internal reflective surfaces disposed on opposite sides of the prism proximate respectively the source and the detector.

The present invention will now be described by way of example only and with reference to the accompanying drawings of which:
Figs. 1(A) and 1(B) schematically show an exemplary embodiment of the invention for detecting the moisture state on the outside of a windscreen;
Figs. 2(A) and 2(B) schematically represent an exemplary embodiment of the invention for detecting the moisture state of the inside of a windscreen; and
Figs. 3(A), 3(B) and 3(C) are sectional views of a preferred design of the layout shown in Fig. 1 and a schematic representation of the light beam pattern that it produces.

An infra-red (IR) light beam is provided by diode (LED) 4 and directed generally along the path 5 toward windscreen 7. The angle of incidence is selected such that at least a high proportion of the beam 5 travels through the material of windscreen 7 to be internally reflected off the outside surface 1, when the outside surface 1 is dry, to continue along the path 5 to the detector 6.

The presence of water, such as water drops 3, on the outside surface 1 at the point of incidence of beam 5, will result in a substantial portion of diffused light 8 being lost from the beam 5. Thus, with water on the outside of the screen 7, the amount of light detected at detector 6 is diminished thus allowing detector 6 to provide a signal to a logic circuit or other electronic device, which is indicative of the presence of water on the windscreen 7.

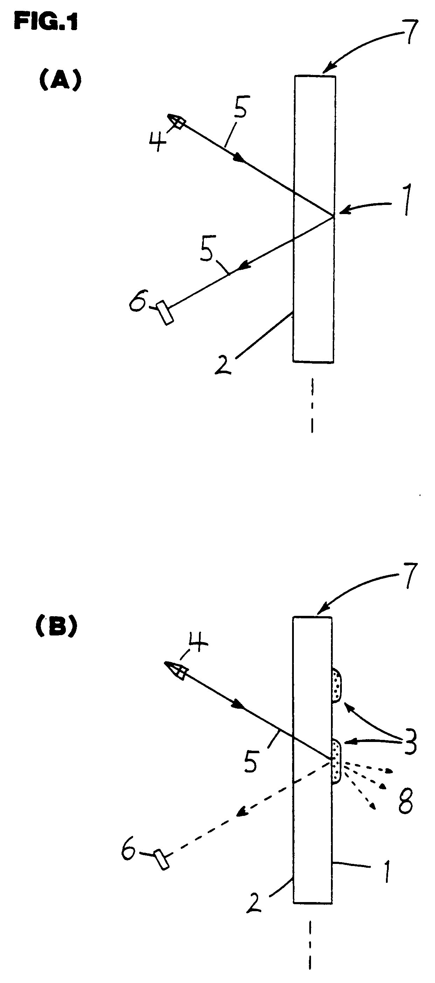

A wiper control circuit device, not shown in Fig. 1, is connected to the detector and upon receipt of the signal indicating water on the screen 7, can initiate a first wiping action of the windscreen wiper blades. The moving wiper blade produces a wall of water along its leading edge being characteristically proportional to the amount of water that was on the windscreen 7 at the time of the wiper blade sweep. As this wall of water passes the point of incidence of the laser beam 5, the detector 6 receives a varying amount of reflected light beam 5 and thus produces a signal which is directly related to the amount of moisture that was wiped by the blade from the screen. This signal indicating the amount of moisture on the screen is then processed and used to control the next sweep of the blade. Such control of the blade can be related to the blade speed or lag time between the last and next sweep of the blade.

When the screen 7 becomes dry the reflected beam 5 reaching the detector 6 become constant and the wipers are switched off.

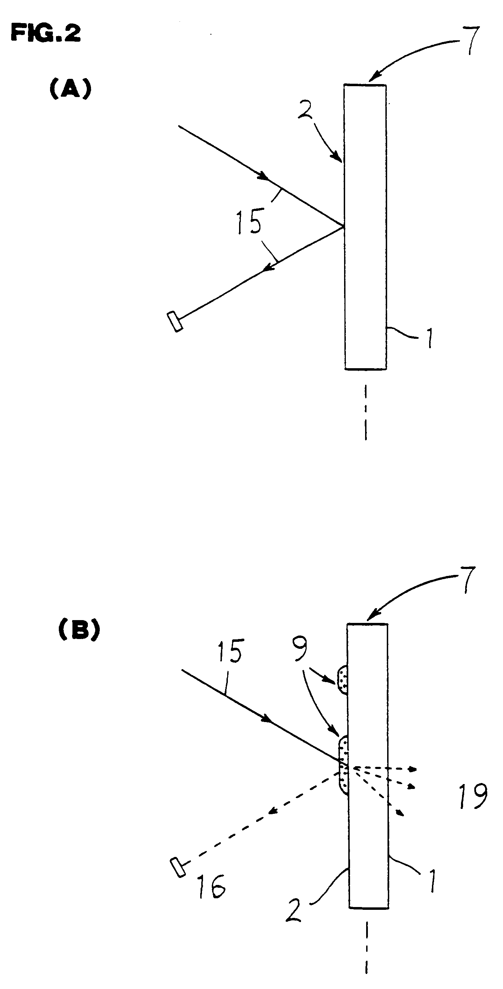

In Fig. 2 the infra red beam 15 is directed at the windscreen 7 at an angle of incidence so as to create substantial external reflection from the inside surface 2 of the windscreen 7. Here, the presence of misting, creating moisture condensation 9, on the inside 2 is measured by detector 16, where the amount of light detected is diminished due to light dispersion 19, in a manner similar to that described before hand with reference to the Fig. 1 embodiment. In this case detector 16 is connected via circuitry to demisting equipment of the vehicle.

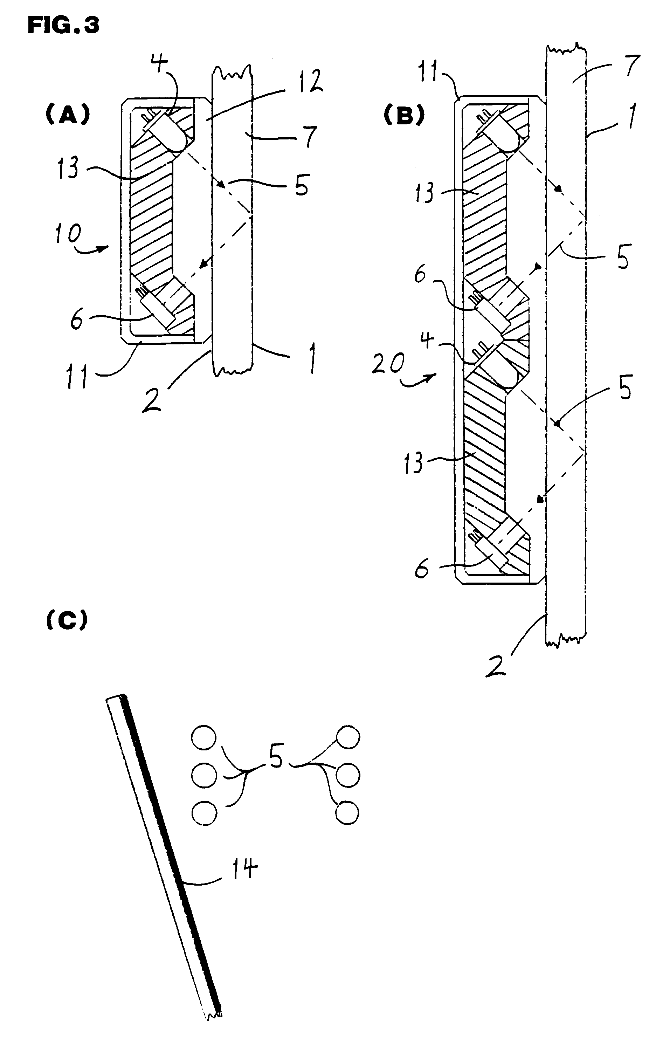

Figs. 3A and B show in plan similar integral assemblies 10 and 20 which embody in a particular form the devices shown in Fig. 1 and described above.

The assembly 10 includes a front window 12 which is transparent to infra red light and which is adhered to, and optically matched with, the inside surface 2 of the windscreen 7. In a rear face of the window 12 is an array of three infra-red LEDs 4 to produce beams 5 angled at the screen 7. The light beams 5 strike the outside surface 1 at the desired angle of incidence to be reflected back into the window 12 impinge on a matching set of three diode light receivers 6.

Respective pairs of co-operative LED 4 and detector 6 are housed in their own module 13, three modules 13 being located side by side within a case enclosure 11, creating a pattern of three closely spaced illumination points which ensure correct operation with defective wiper blades. The device is well adaptable to rear windscreens of cars which include wipers.

The assembly 20 comprises six of the modules 13 arranged in two rows of three. The pattern of illumination by assembly 20 is shown in Fig. 3C and allows connected electronics (not shown) to override deleterious effects such as debris, e.g. impacted insects, as well as water streaks caused by faulty wiper blades. The assembly 20 is fixed with the front face of the window 12 flush against the screen surface 2 at any convenient point aligned with a portion of the outside surface 1 wiped by a wiper blade 14. In a typical road vehicle front windscreen this can often be between the screen and the interior rear vision mirror.

### INDUSTRIAL APPLICABILITY

The windscreen may be ably screen which is to be kept clear of rain or similar by some controllable cleaning mechanism such as, but not necessarily, a pendulous wiper. It does have particular use in road vehicles, boats and aeroplanes.

## Claims

1. A method of controlling a vehicle windscreen wiper comprising:
directing light energy (5,15) from the vehicle interior to a point of incidence (1) of the windscreen (7), swept by the windscreen wiper (14), at a preselected angle such that the directed light energy (5,15) will be substantially totally internally reflected by the windscreen (7) only when the exterior surface is dry;
detecting (6,16) the light energy reflected by the windscreen and determining the amount of the reflected light energy;
electronically processing the determined amount of reflected light energy that is detected during at least one portion of each action of the windscreen wiper (14) to produce a signal; and
controlling the speed of motion of the windscreen wiper (14), or a time delay from one action of the windscreen wiper (14) to the next action, according to said signal; characterised in that said portion at least includes a period when light energy is reflected as a result of a wall of water in advance of the wiper (14) as the wiper passes the point of incidence and wherein said signal is indicative of the magnitude of the wall of water.

2. A method as claimed in claim 1 wherein the amount of reflected light is determined substantially only at the time the wiper blade passes the point of incidence.

3. The method as claimed in any of claims 2 and 3 wherein the light energy is directed as a plurality of parallel light beams.

4. The method as claimed in any of claims 2 to 4 wherein the light energy is infra-red light.

5. A device for controlling a vehicle windscreen wiper (14) comprising:
a light energy source (4) for directing light energy (5,15) onto a surface (1) of the windscreen, at a point of incidence to be swept by the windscreen wiper (14), from the vehicle interior,
a light energy detector (6,16) for detecting the directed light energy reflected by said windscreen surface (1) and for producing a signal corresponding to the detected amount of reflected light energy;
a controller for controlling the speed of the windscreen wiper action, or a time delay between a current windscreen wiper action and the next windscreen wiper action, characterised in that the controller is controlled by the detected amount of light energy that corresponds to the magnitude of a wall of water in advance of the wiper (14) as the wiper (14) passes said point of incidence.

6. A device as claimed in claim 5 wherein the light source (4) produces at least one beam of directed light, and said light source (4) and light detector (6,16) are housed in a single unit (10,20).

7. A device as claimed in any of claims 5 and 6 wherein the light source (4) is a plurality of infra red LEDs producing a plurality of spaced apart parallel beams and the light detector (6,16) is a corresponding number of infra red detectors.

## Patentansprüche

1. Verfahren zum Steuern eines Fahrzeugwindschutzscheiben-Wischers, aufweisend:
Richten von Lichtenergie (5, 15) von dem Fahrzeuginnenraum zu einem Auftreffpunkt (1) der Windschutzscheibe (7), der von dem Windschutzscheiben-Wischer (14) überstrichen wird, unter einem vorgewählten Winkel derart, daß die gerichtete Lichtenergie (5, 15) im wesentlichen vollständig innerhalb der Windschutzscheibe (7) nur dann reflektiert wird, wenn die Außenfläche trocken ist;
Erfassen (6, 16) der von der Windschutzscheibe reflektierten Lichtenergie und Bestimmen der Menge der reflektierten Lichtenergie; elektronisches Verarbeiten der bestimmten Menge der reflektierten Lichtenergie, die erfaßt wird während wenigstens eines Abschnittes der Betätigung des Windschutzscheiben-Wischers (14), um ein Signal zu erzeugen; und
Steuern der Bewegungsgeschwindigkeit des Windschutzscheiben-Wischers (14), oder einer Zeitverzögerung von einer Betätigung des Windschutzscheiben-Wischers (14) zur nächsten Betätigung, gemäß dem Signal;
dadurch gekennzeichnet, daß der Abschnitt wenigstens eine Zeitdauer umfaßt, wenn die Lichtenergie reflektiert wird als ein Ergebnis einer Wasserwand vor dem Wischer (14), wenn der Wischer den Auftreffpunkt überläuft und wobei das Signal die Größe der Wasserwand angibt.

2. Verfahren nach Anspruch 1, wobei die Menge des reflektierten Lichts im wesentlichen nur zu der Zeit bestimmt wird, wenn das Wischerblatt den Auftreffpunkt überstreicht.

3. Verfahren nach einem der Ansprüche 2 und 3, wobei Lichtenergie als eine Vielzahl von parallelen Lichtstrahlen gerichtet ist.

4. Verfahren nach einem der Ansprüche 2 bis 4, wobei die Lichtenergie Infrarot-Licht ist.

5. Vorrichtung zum Steuern eines Fahrzeugwindschutzscheiben-Wischers (14), aufweisend:
Eine Lichtenergiequelle (4) zum Richten von Lichtenergie (5, 15) auf eine Oberfläche (1) der Windschutzscheibe, an einem Auftreffpunkt, der von dem Windschutzscheiben-Wischer (14) zu überstreichen ist, und zwar von dem Fahrzeug-Innenraum aus,
einen Lichtenergie-Detektor (6, 16) zum Erfassen der gerichteten Lichtenergie, die von der Windschutzscheibenfläche (1) reflektiert wird, und zum Erzeugen eines Signals entsprechend der erfaßten Menge der reflektierten Lichtenergie;
ein Steuergerät zum Steuern der Geschwindigkeit der Windschutzscheibenwischerbetätigung, oder einer Zeitverzögerung zwischen einer gegenwärtigen Windschutzscheibenwischerbetätigung und der nächsten Windschutzscheibenwischerbetätigung, dadurch gekennzeichnet, daß das Steuergerät gesteuert wird durch die erfaßte Lichtenergiemenge, die der Größe einer Wasserwand vor dem Wischer entspricht, wenn der Wischer (14) den Auftreffpunkt überstreicht.

6. Vorrichtung nach Anspruch 5, wobei die Lichtquelle (4) wenigstens einen Strahl von gerichtetem Licht erzeugt und die Lichtquelle (4) und der Lichtdetektor (6, 16) in einer einzelnen Einheit (10, 20) aufgenommen sind.

7. Vorrichtung nach einem der Ansprüche 5 und 6, wobei die Lichtquelle (4) eine Vielzahl von Infrarot-LEDs ist, die eine Vielzahl von beabstandeten parallelen Strahlen erzeugen, und der Lichtdetektor (6, 16) eine entsprechende Anzahl von Infrarot-Detektoren ist.

## Revendications

1. Procédé de commande de l'essuie-glace d'un véhicule comprenant :
la direction d'une énergie lumineuse (5,15) de l'intérieur du véhicule à un point d'incidence (1) du parebrise (7), balayé par l'essuie-glace (14), suivant un angle présélectionné tel que l'énergie lumineuse dirigée (5,15) soit substantiellement entièrement réfléchie intérieurement par le pare-brise (7) seulement lorsque la surface extérieure est sèche ;
la détection (6,16) de l'énergie lumineuse réfléchie par le pare-brise et la détermination de la quantité de l'énergie lumineuse réfléchie ;
le traitement électronique de la quantité déterminée d'énergie lumineuse réfléchie qui est détectée pendant au moins une partie de chaque action de l'essuie-glace (14) pour produire un signal ; et
la commande de la vitesse de déplacement de l'essuie-glace (14), ou d'un délai entre une action de l'essuie-glace (14) et la suivante, en fonction dudit signal : caractérisée en ce que ladite partie comprend au moins une période où l'énergie lumineuse est réfléchie sous l'effet d'une masse d'eau précédant l'essuie-glace (14) lorsque l'eesuie-glace passe devant le point d'incidence et dans laquelle ledit signal indique l'importance de la masse d'eau.

2. Procédé selon la revendication 1 dans lequel la quantité de lumière réfléchie n'est déterminée substantiellement qu'au moment où l'essuie-glace passe devant le point d'incidence.

3. Procédé selon l'une quelconque des revendications 1 et 2 dans lequel l'énergie lumineuse est dirigée sous forme d'une pluralité de rayons lumineux parallèles.

4. Procédé selon l'une quelconque des revendications 1 à 3 dans lequel l'énergie lumineuse est une lumière infrarouge.

5. Dispositif pour commander un essuie-glace de véhicule (14) comprenant :
une source d'énergie lumineuse (4) pour diriger l'énergie lumineuse (5,15) sur la surface (1) du pare-brise, à un point d'incidence devant être balayé par l'essuie-glace (14), de l'intérieur du véhicule,
un détecteur d'énergie lumineuse (6,16) pour détecter l'énergie lumineuse dirigée réfléchie par ladite surface (1) du pare-brise et pour produire un signal correspondant à la quantité détectée d'énergie lumineuse réfléchie ;
un contrôleur pour commander la vitesse de l'action de l'essuie-glace, ou un délai entre une action en cours et l'action suivante de l'essuie-glace, caractérisé en ce que le contrôleur est commandé par la quantité détectée d'énergie lumineuse qui correspond à l'importance d'une masse d'eau précédant l'essuie-glace (14) tandis que l'essuie-glace (14) passe devant ledit point d'incidence.

6. Dispositif selon la revendication 5 dans lequel la source lumineuse (4) produit au moins un rayon de lumière dirigée, et dans lequel ladite source lumineuse (4) et ledit détecteur de lumière (6,16) sont logés dans une même unité (10,20).

7. Dispositif selon l'une quelconque des revendications 5 et 6 dans lequel la source lumineuse (4) est une pluralité de LED infrarouges produisant une pluralité de rayons parallèles espacés et dans lequel le détecteur de lumière (6,16) est un nombre correspondant de détecteurs infrarouges.
